# EUROPÄISCHE PATENTANMELDUNG

(11) **EP 0 987 510 A2**
(43) Veröffentlichungstag der Anmeldung: **22.03.2000**
(21) Anmeldenummer: 99810821.1
(22) Anmeldetag: 14.09.1999
(51) Int. Cl.: F28D 20/00, F28F 27/00

(54) **Wärmespeicher**

(30) Priorität: 17.09.1998 CH 189598
(71) Anmelder: Zeder, Alois, 4713 Matzendorf (CH)
(72) Erfinder: Zeder, Alois, 4713 Matzendorf (CH)

(57) **Zusammenfassung**

Wärmespeicher bestehend aus mehreren ineinandergestellten, gegeneinander thermisch isolierten Kammern (1,2,3), wobei die innerste Kammer (1) das Speichermedium für die höchste Maximaltemperatur enthält, die äusserste Kammer für die tiefste Maximaltemperatur. Verschiedene Wärmequellen speisen die Wärme stets in die Kammer mit der gerade höchstmöglichen Temperatur ein. Die Wärmeeinspeisung kann über Wärmetransport in einem festen Medium oder über Flüssigkeittransport erfolgen. Der Wärmeentzug erfolgt aus der Kammer mit der jeweiligen Anspruchs Arbeitstemperatur.

## Beschreibung

Die vorzuschlagende Erfindung betrifft einen Wärmespeicher wie er im unabhängigen PA 1 definiert ist.

Der erfindungsgemässe Wärmespeicher besteht aus mehreren ineinander geschachtelten Kammern, welche gegeneinander thermisch isoliert sind. Die Anzahl Kammern ist nicht auf 2 beschränkt , sondern an die Anzahl der verschiedenen benötigten
Arbeitstemperaturen und/oder an die Anzahl der verschiedenen Temperaturniveaus der vorhandenen Energiequellen angepasst. Die Kammern sind durch obere und untere Verbindungsleitungen verbunden, wobei nur in den oberen Verbindungsleitungen Ventile eingebaut sind;
Die Ventile können sowohl manuell, als auch automatisch geöffnet werden. In einer besonders vorteilhaften Ausbildungsform werden Thermoventile eingesetzt, welche beim Ueberschreiten der vorgewählten Maximaltemperatur der inneren und wärmeren Kammer automatisch öffnen und so die überschüssige Temperatur der inneren Kammer in die äussere Kammer abfliessen lassen, somit auch Niveauausgleich.
Ueber ein Heizelement oder einen Wärmetauscher oder mehrere in der Anzahl wird zunächst die innere Kammer aufgeheizt . Ist die Temperatur im Primärkreislauf zu tief, so dass der Wärmeaustausch zur inneren Kammer nicht mehr effizient genug, resp.negativ ist, so wird die Primärenergie direkt in die äussere Kammer mit der tieferen Temperatur geleitet. Sind mehrere Primärquellen unterschiedlicher Temperatur vorhanden, so kann jede Quelle zum heizen einer separaten Kammer verwendet werden. Die Form der Kammern ist im Prinzip beliebig, von Vorteil statisch zylindrisch.

Werden als Speichermedium in den Kammern feste Medien mit einer kleineren spezifischen Wärmekapazität als Wasser eingesetzt, so ist die Wärmekapazität bei gleichem Volumen trotzdem wesentlich höher, dank Arbeitstemperaturen von über 225°C. Je nach Speichermedium Wahl sind sogar noch höhere Arbeitstemperaturen möglich. Als festes Speichermaterial kommen beispielsweise stehende Specksteinplatten und/oder grober Schotter oder gleichwertigen Materialien zur Anwendung. Die Form der Speichermediumträgerplatte aus Kupfer kann plan, zylindrisch oder hohltrichterförmig sein. Das feste Medium kann 75% des gesamten Speichervolumens einnehmen. Die Dimension der Speicherträgerplatte aus Kupfer ist statisch wärmetechnisch gut zu berechnen.

PA1-7 Wird eine andere Wärmespeichegrägearansportflüssigkeit als Wasser eingesetzt, z.B. eine Paraffin-Glycerinmischung, andere Produkte höherem Wärmeträgerwert, verwendet so kann die Temperatur von ca. 90 °C auf 220 °C resp. auf über 300 °C erhöht werden, d.h. die Speicherkapazität und möglichen Arbeitstemperaturen werden dadurch wesentlich erhöht.

Zum Laden resp. aufheizen der Speicher kann jede erdenkliche Wärme aus Verbrennungsprozessen von festen flüssigen gasförmigen Brennstoffen, wie auch Abstrahlungswärmen, Sonnenenergie Rückkopplungswärmen,Prozesswärmen, ,elektrotechnische Krafttauchsiedersystemwärme, Glasfaserresonanzleiterumwandlerwärme,wie auch Systemgebundene Kreisläufe z.B. Wärme- resp. Kälteprozesstemperatur gebundene Systeme, wie Kühlanlagen, Klimaanlagen, H²O Gewinnungsanlagen, Wärmekraftmaschinen, Abstrahlungswärme, Auspuff- und Ventilationenergie resp. deren Wärme, Heissluftsystem, Industrierückkopplungswärme, Abwasser wie auch Bodenwärme auch/oder mit in Verbindung mit Wärmepumpen, Haustechnik und Industrieanlagen verwendet resp. eingesetzt werden.
Einsetzbar ist der Wärmespeicher nach Anforderung und Grösse in festen und mobilen Anlagen zu Lande auf und in Wasserfahrzeugen jeder Art und Luftfahrttechnik , gilt auch für Module im Weltall.

Der Transport der Wärme zum Wärmespeicher kann sowohl durch ein flüssiges Speichermedium als auch mit über gut isolierte Röhren oder Stäbe aus Kupfer - Silber - Legierung oder Kupfer erfolgen, physikalisches Wärmegefälle, wie auch mit Glasfaserresonanzleiter - Umwandler Wärmetauscher in Wirkverbindung mit jeweils zugehörendem Wärmetauscher resp. Umwandler. Als thermische Isolierung können sowohl natürliche Isolationsmaterialien wie Bimstein, Kork, Bambus, als auch Kunststoffe, Keramikfasern etc. verwendet werden.

Wärmetauscher arbeiten vorwiegend mit Hochtemperaturträger wie z.B. Paraffin-Glycerin Mischung etc. in Verbindung mit Kupfer-Silber-Legierungsstäben, Rohre, als Wärmetransportmittel in Kombination je nach Erfordernis auch mit Brauchwasser in Rohren separat geführt, gilt für Vor- und Rücklauf zum Wärmespeicher. Dem Ausdehnungskoeffizient ist bautechnisch konstruktiv Rechnung zu tragen.

Die erfindungemässen Wärmespeicher können in verschiedenen Grössen hergestellt werden: von mobilen Anlagen bis zum Wärmekraftwerk ist alles möglich.

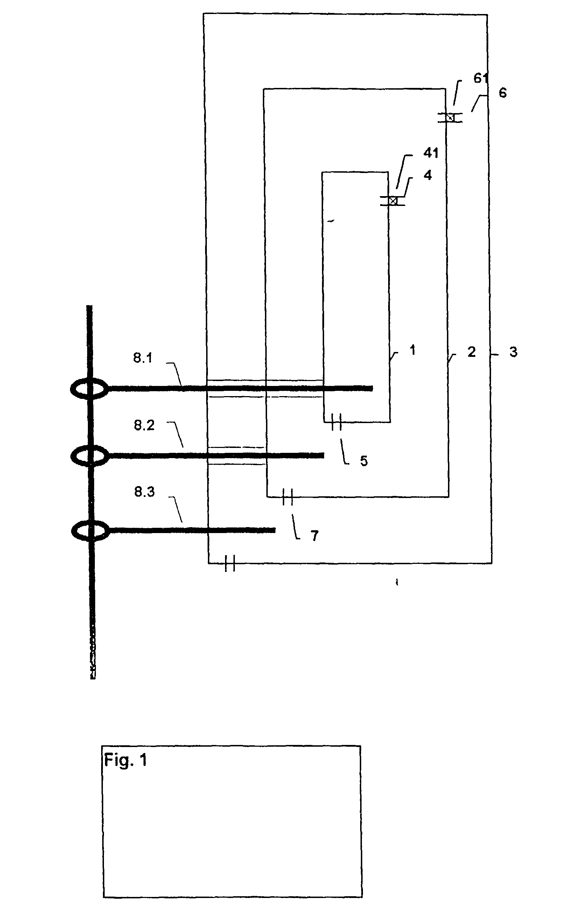

Fig.1 Wärmetauscher bestehend aus 3 ineinander geschachtelten Kammern. In einem ersten Ausführungsbeispiel (Fig.1) wird der Aufbau eines Wärmespeichers mit 3 Kammern beschrieben. Die 3 Kammern (1,2,3) sind gegeneinander thermisch isoliert. Die unteren Verbindungsleitungen (5,7) der Kammern haben einen genügend kleinen Querschnitt, so dass bei geschlossenen Ventilen in den oberen Verbindungsleitungen (4,6) kein wesentlicher Fluss des Kammerinhaltes von einer Kammer in die nächste stattfindet. Uebersteigt beim Aufheizen die Temperatur einer inneren Kammer den vorgewählten Grenzwert, so öffnet sich das Thermoventil der oberen Verbindungsleitung zur nächsten äusseren Kammer automatisch. Die heisse Flüssigkeit fliesst über die obere Verbindungsleitung in die nächste äussere Kammer mit der tieferen Temperatur, während unten kühlere Flüssigkeit in die innere Kammer strömt.

Bei geöffneten Ventilen (41,61) und Temperaturunterschieden zirkuliert die Flüssigkeit wegen des Dichteunterschiedes zwischen benachbarten Kammern automatisch. Eine Umwälzpumpe ist in der Regel nicht nötig, jedoch bei Bedarf einzusetzen.

Zur Verbesserung der Mediumumwälzung kann der Wärmetauscher resp. die Wärmespeichermediumträgerplatte aus Kupfer zusätzlich in Verbindung mit einem Wirbeltrichter ausgebildet sein. Die innerste Kammer wird z.B. durch eine oder mehrere Wärmequellen, in Wirkverbindung mit den zugeordneten Umwandlungs- resp. Steuerungselementen aufgeheizt.

Die Wärme aus einer Wärmepumpe wird über den ersten Wärmetauscher zuerst in die erste Kammer (1) geleitet. Danach fliesst das flüssige Medium mit der Temperatur der ersten Kammer in den zweiten Wärmetauscher in der zweiten Kammer (2) .

Erreicht die Vorlauftemperatur des Primärmediums die Temperatur der ersten Kammer (1) nicht, so wird er erste Wärmetauscher unterbrochen und die Wärme direkt in die zweite Kammer geleitet. Dadurch wird verhindert, dass der Wirkungsgrad des ersten Wärmetauschers negativ wird.

Die äusserste Kammer wird über ein Expansionsgefäss, eine Explosionsrückschlagklappe und eine Feuerschutzmuffe, inklusive Blitzschutz und Erdung abgesichert.

In einem zweiten speziellen Ausführungsbeispiel wird die Wärme über isolierte Wärmeleitstäbe resp. Rohre, z.B. aus einer Kupfer-Silber-Legierung oder Kupfer dem Wärmetauscher zugeführt. Fällt die Temperatur der Stäbe unter die Temperatur des Wärmespeichers der jeweiligen Kammer, so öffnet sich elektronisch und/oder pneumatisch technisches System, auch hydraulisch gesteuert denkbar, die jeweilig optimale Steuerungsstufe für die Kontaktzangen , d.h. der Wärmeentzug aus dem Speicher wird verhindert.
Damit die Wärme in die Kammer mit der jeweils optimalen Temperatur geleitet werden kann, besitzt jede Kammer ihren eigenen Zuleitungsstab, welcher mit einem Schrittmotor oder einem Magnetdrehmechanismus und einer Trapezzange an den primären Wärmezuleitungsstab angeschlossen werden kann.

Um die Ueberhitzung des Wärmespeichers auch bei einem Ausfall der elektronischen Steuerung sicher zu vermeiden, öffnet sich die Kontaktzange bei einer einstellbaren Maximaltemperatur dank Bimetallefekt oder Gedächnislegierung selbstständig.

Wir die Wärme über ein flüssiges Primärmedium zugeführt, so strömt das Primärmedium zuerst in diejenige Kammer mit der höchsten Temperatur unterhalb der Temperatur des Primärmediums, danach durch die nächste äussere Kammer, welche eine etwas tiefere Temperatur aufweist, usw. , bis das Primärmedium ein Maximum an Wärme abgegeben hat.

Die Umwälzung des Primärmediums kann über natürliche Konvektion dank Dichteunterschieden , oder mit Hilfe einer Umwälzpumpe und/oder Wärmepumpe erfolgen.

Am höchsten Punkt der Vor-und Rücklaufleitungen ist ein Kompensationsgefäss und zudem eine Entlüftungsventil einzubauen. Die Niveauregulierung ist bauseits genau zu beachten zum Standort des Speichers. Bei Bedarf sind konstruktive Vorkehren zu treffen.

Die Wärme kann auch durch ein kombiniertes System von Wärmequellen zum Wärmespeicher über ein geeignetes Steuerungssystem zu- oder abgeführt werden. Ueber grosse Distanzen erfolgt der Wärmetransport durch ein flüssiges Medium, geführt durch gut isolierte Kupferrohre. Lösbare Kontaktzangen erlauben die Einspeisung in die optimalen Kammern des Wärmespeichers mittels Wärmeleitstäben. Die Wärmeentnahme kann direkt oder über Wärmetauscher erfolgen, die mittels Thermoventilen angesteuert werden. Das Sekundärmedium entzieht zuerst der Kammer mit der tiefsten Temperatur ein Maximum an Wärme, danach von der Kammer mit der nächst höheren Temperatur usw. bis es die maximal erwünschte Temperatur erreicht hat.

## Patentansprüche

1. Wärmespeicher bestehend aus mindestens zwei Kammern (1,2) dadurch gekennzeichnet, dass die Kammern ineinander geschachtelt sind, wobei die jeweils äussere Kammer die jeweils innere Kammer umgibt, und dass die Kammern (1,2) jeweils mit einer oberen (4) und einer unteren Verbindungsleitung (5) verbunden sind, dass die Kammern ein festes und/oder flüssiges Medium zur Speicherung der Wärme enthalten, dass integriert je Kammer elektronische und elektromechanische Elemente Kontaktzangen zur Steuerung der Wärme - Zu und Abfuhr entweder durch metallische Wärmeleitung und/oder mittels eines flüssigen Wärmeträgermediums und/oder mittels Glasfaserkabel-Uebertragung von Infrarotwärmestrahlung erfolgt.

2. Wärmespeicher nach Anspruch 1, dadurch gekennzeichnet , dass zur metallischen Wärmeleitung lanzenförmige, in der Tauchtiefe einstellbare Wärmeleitstäbe vorhanden sind.

3. Wärmespeicher nach einem der Ansprüche 1-2, dadurch gekennzeichnet, dass die Kammern thermisch isoliert sind.

4. Wärmespeicher nach einem der Ansprüche 1-3 , dadurch gekennzeichnet, dass in die oberen und unteren Verbindungsleitungen Ventile eingebaut sind, insbesondere aber nur in den oberen Verbindungsleitungen , wobei diese entweder als selbsttätig wirkende Thermoventile ausgebildet sind oder mit den Steuerelementen wirkverbunden sind.

5. Wärmespeicher nach einem der Ansprüche 1-4, dadurch gekennzeichnet , dass jede Kammer mindestens eine Energiequelle besitzt und dazu gegebenenfalls Wärmeaustauschereinheiten angeordnet sind.

6. Wärmespeicher nach einem der Ansprüche 1-5, dadurch gekennzeichnet , das als festes Speichermedium Speckstein , insbesondere Specksteinplatten , oder Schotter in den Kammern vorhanden ist wobei das feste Speichermedium ca. 75% des Kammervolumens ausfüllt.

7. Wärmespeicher nach einem der Ansprüche 1-6, dadurch gekennzeichnet , dass als flüssige Speicher- und Wärmetransportmedium eine Glycerin-Paraffin-Mischung oder andere Thermospeicher-Flüssigkeiten verwendet werden.

8. Wärmespeicher nach einem der Ansprüche 1-7, dadurch gekennzeichnet, dass die Steuerungselemente Lanzensonden , Schwimmer mit zugeordneten Führungsrohren, Temperaturfühler und Impulsgeber aufweisen zur Steuerung und Regelung des Lade bzw. Entladevorganges der einzelnen Kammern.

9. Wärmespeicher nach einem der Ansprüche 1-8, dadurch gekennzeichnet, dass zur netzunabhängigen Stromversorgung der Steuerungselemente als Energiequelle 12V-Batterien oder Solarzellen vorgesehen sind.
